# EUROPÄISCHE PATENTANMELDUNG

(11) **EP 0 623 549 A2**
(43) Veröffentlichungstag der Anmeldung: **09.11.1994**
(21) Anmeldenummer: 94105105.4
(22) Anmeldetag: 31.03.1994
(51) Int. Cl.: B66F 9/18, B62B 3/10

(54) **Greifvorrichtung**

(30) Priorität: 06.05.1993 DE 9306798 U; 10.02.1994 DE 9402195 U
(71) Anmelder: SCHNEIDER-LEICHTBAU GmbH FABRIK FÜR, PALETTEN UND FÖRDERGERÄTE, D-79110 Freiburg-Lehen (DE)
(72) Erfinder: Schneider, Josef, D-79110 Freiburg-Lehen (DE)
(74) Vertreter: Twelmeier, Ulrich, Dipl.Phys.

(57) **Zusammenfassung**

Die Erfindung bezieht sich auf eine Greifvorrichtung, insbesondere für Hubwagen mit einem höhenverstellbaren Schlitten, zum Transport von Fässern. Die Vorrichtung weist einen Greifer (16) auf, der verschieblich an einer um eine Achse (17) verschwenkbaren Führungsstange (18) angeordnet ist. Zum Faßtransport ist der Greifer (16) arretierbar.

## Beschreibung

Die vorliegende Erfindung geht aus von einer Greifvorrichtung, insbesondere für Hubwagen mit höhenverstellbaren Schlitten zum Transport von Fässern.

Zum aufrechten Transport von Fässern sind Hubwagen bekannt, die auf den bekannten Hubwagen basieren.

Der Hubwagen weist einen höhenverstellbaren Schlitten auf. Die Höhenverstellung des Schlittens erfolgt dabei hydraulisch. An dem Schlitten ist eine Greifvorrichtung angeordnet, mittels derer ein Faß gegriffen und so festgehalten wird, daß ein Transport mit dem Hubwagen möglich ist.

Die Greifvorrichtung umfaßt einen Greifer und eine Absützung. Der Greifer greift hinter eine umlaufende Wulst an einem Rand eines Fasses. Die Abstützung kommt zur Anlage unterhalb der umlaufenden Wulst.

Bei Fässern muß nicht zwingend eine Wulst vorgesehen sein. Es kann auch ein entsprechend ausgebildeter Rand vorliegen, welcher es ermöglicht dem Greifer und der Abstützung das Faß sicher zu greifen und zu transportieren.

Desweiteren ist es bekannt die Greifvorrichtung mit einem Anschlag auszubilden, an dem ein aufgenommenes Faß mit seiner Mantelfläche zur Anlage kommt.

Bei den bekannten Greifvorrichtungen wird der Greifer mittels einer Spindel verstellt.

Dies hat den Nachteil, daß zum einen der Schlitten mit dem Greifer so weit hochgefahren werden muß, daß dieser oberhalb des Fasses sich befindet um anschließend wieder heruntergefahren zu werden, bis der Greifer zur Anlage am Faß kommt. Anschließend wird mittels des Greifers das Faß zur Abstützung hin herangezogen und festgeklemmt.

Diese Ausführungsform hat den Nachteil, daß die Handhabung relativ zeitaufwendig ist.

Desweiteren hat sich gezeigt, daß die bekannte Greifvorrichtung nur Fässer greifen kann, die eine bestimmte Wulst bzw. Randausbildung aufweisen.

Hiervon ausgehend liegt der Erfindung die Aufgabe zugrunde die bekannte Greivorrichtung so weiterzubilden, daß die Handhabung vereinfacht wird und Fässer mit unterschiedlicher Wulst bzw. unterschiedlichem Rand transportierbar sind.

Diese Aufgabe wird erfindungsgemäß durch die Merkmale des Anspruchs 1 oder 9 gelöst. Vorteilhafte Weiterbildungen sind Gegenstand der Unteransprüche.

Die erfindungsgemäße Greifvorrichtung zeichnet sich dadurch aus, daß der Greifer verschieblich an einer um eine Achse verschwenkbare Führungsstange angeordnet ist und der Greifer zum Faßtransport arretierbar ist.

Durch diese Ausbildung wird nunmehr die Transportaufnahme wesentlich erleichtert.

Es ist nunmehr nicht zwingend notwendig, daß der Schlitten des Hubwagens auf die zur Aufnahme des Fasses notwendige Höhe verstellt werden muß. Durch die Verschieblichkeit des Greifers auf der Führungsstange kann der Greifer, selbst wenn der Schlitten insbesondere tiefer liegt, das Faß aufgenommen werden.

Mit der verschwenkbaren Führungsstange wird der Greifer nunmehr über das Faß geführt und durch Absenken des Greifers auf den Faßdeckel gegriffen.

Zum Transport ist der Greifer arretierbar, so daß das Faß während des Transports nicht verlorengehen kann.

Vorteilhaft ist es, wenn die Führungsstange am Schlitten angeordnet ist. Dies ist zweckmäßig, da hierdurch Fässer unterschiedlichster Höhe transportiert werden können. Desweiteren muß die Führungsstange nicht für alle Faßhöhen entsprechend lang ausgebildet sein.

Vorteilhaft ist es, wenn die Führungsstange unterhalb des Greifers liegt.

Die Handhabung wird noch weiter erleichtert, wenn der Greifer mittels eines Betätigungshebels verschiebbar ist.

Es hat sich als zweckmäßig erwiesen, den Greifer gegen eine Federkraft nach oben zu verschieben. Dies hat den Vorteil, daß der Greifer durch eine Federkraft bei dem Ansetzen des Greifers dieser nach Loslassen des Greifers oder eines Betätigungshebels automatisch zur Anlage am Faß kommt.

Dabei ist es vorteilhaft, wenn der Betätigungshebel mit dem Greifer gelenkig verbunden ist.

Zum sicheren Transport des Fasses wird vorgeschlagen den Betätigungshebel arretierbar zu gestalten.

Gemäß einer weiteren vorteilhaften Weiterbildung wird vorgeschlagen den Greifer an einer die Führungsstange umgebenden Buchse anzuordnen. Diese Buchse ist zweckmäßigerweise gelenkig mit dem Betätigungshebel verbunden. Oberhalb der Buchse ist eine Druckfeder vorgesehen, die die Buchse nach unten drückt, wobei das andere Ende der Feder gegen eine Begrenzung zur Anlage kommt.

Gemäß einem anderen erfindungsgemäßen Gedanken wird eine Greifvorrichtung vogeschlagen, die einen Greifer aufweist, der einen ersten um eine Achse verschwenkbaren Arm und einen zweiten am ersten Arm angeordneten verschwenkbaren Arm aufweist. Der zweite Arm ist dabei über eine Umsetzeinrichtung mit dem Schlitten verbunden. Durch diese Ausbildung ist eine Greifvorrichtung verwirklicht, bei welcher bei einer Aufwärtsbewegung des Schlittens der Greifer selbsttätig ein Faß greift und dieses zum Transport festklemmt. Diese Ausbildung hat gegenüber der manuell betätigten Greifvorrichtung den Vorteil, daß die zum sicheren Handhaben eines Fasses notwendige Klemmkraft stets aufgebracht wird. Ein weiterer Vorteil dieser Ausbildung ist, daß die Handhabungszeit weiter verringert wird.

Für die Handhabung schwerer Fässer ist es von Vorteil, den Greifer mit zwei parallel zu- und übereinander angeordneten ersten Armen auszubilden. An ihren vorderen Enden weisen die Arme eine Greifnase auf. Es können auch jeweils zwei Paare der ersten Arme vorgesehen werden. Diese Arme sind dann parallel zueinander angeordnet.

Für die Umsetzung der i.w. vertikalen Bewegung des Schlittens in eine horizontale und vertikale Bewegung des Greifers ist eine Umsetzeinrichtung vorgesehen, die ein erstes und ein zweites Verbindungselement sowie ein um eine Achse verschwenkbares Koppelglied umfaßt. Das erste Verbindungselement ist mit seinem einen Ende verschwenkbar mit dem Schlitten und das andere Ende ebenfalls verschwenkbar mit dem Kopplungsglied verbunden.

Das zweite Verbindungselement ist einerseits mit dem Koppelglied und andererseits mit dem ersten Arm verbunden. Der Abstand der Anlenkpunkte der Verbindungselemente zur Drehachse des Koppelglieds kann gleich oder unterschiedlich sein, wodurch auch eine Übersetzung der Bewegung des Schlittens zum Greifer möglich wird.

Diese Ausbildung der Umsetzeinrichtung zeichnet sich durch eine einfache, jedoch sehr wirkungsvolle Konstruktion aus.

Um den Bewegungsablauf des Greifers in Abhängikeit von der vertikalen Verschiebung des Schlittens einstellbar zu gestalten sind Verbindungselement längenveränderlich ausgebildet.

Bei dem Koppelglied handelt es sich vorteilhafterweise um eine Scheibe.

Die Vorrichtunv ist auf einem Träger angeordnet. Der Träger ist höhenverstellbar. Die Höhenverstellbarkeit des trägers ist von Vorteil, um eine Anpassung der Lage der Vorrichtung in Abhängigkeit von einer Faßhöhe unabhängig von der Stellung des Schlittens vornehmen zu können. Zu diesem Zweck wird vorgschlagen eine Zylinder-Kolben-Einheit vorzusehen, die einerseits mit dem Träger und andererseits mit dem Schlitten verbunden ist.

Zur Aufnahmne der Gewichtskraft des Fasses wird gemäß einem weiteren Gedanken der Träger über wenigstens eine Verbindungsstange mit dem Schlitten verbunden. Hierdurch braucht die Zylinder-Kolbeneinheit, wenn diese vorgesehen ist, nicht die gesamte Gewichtskraft des Fasses aufzunehmen.

Um Fässer nicht nur unterschiedlicher Höhe, sondern auch unterschiedlichen Durchmessers transportieren zu können, wird vorgeschlagen, eine Abstützung zu verwenden, welche verschwenkbar ist. Durch die Verschwenkbarkeit der Abstützung legt sich diese bei der Aufnahme des Fasses an den Mantel und unterhalb einer Wulst an. Dies hat den Vorteil, daß nicht nur Fässer unterschiedlicher Höhe, sondern auch unterschiedlicher Durchmesser sowie verschiedenartigen Wülsen transportiert werden können.

Von Vorteil ist es, wenn zwei Abstützungen vorgesehen sind, die in einer Ebene liegen und im Abstand zueinander angeordnet sind.

Dabei liegt vorzugsweise der Greifer mittig zwischen einer die Schwenkachsen der Abstützung verbindenden Linie.

Durch die randseitige Aufnahme des Fasses entsteht beim Anheben des Fasses ein Drehmoment. Dieses hat zufolge, daß das Faß gegen den Schlitten des Hubwagens schlagen kann. Um dies zu verhindern, wird vorteilhafterweise vorgeschlagen einen Anschlag zu verwenden, dessen Abstand zum Schlitten veränderbar ist.

Der Anschlag ist vorteilhafterweise bogenförmig ausgebildet. Die bogenförmige Ausbildung des Anschlags hat eine gewisse zentrierende Wirkung für das Fass, wenn dieses durch den Hubwagen asymmetrisch aufgenommen wird.

Weitere Vorteile und Merkmale des erfindungsgemäßen Hubwagens werden anhand zweier Ausführungsbeispiele beschrieben. Hierbei zeigt:
Figur 1 einen Hubwagen mti einer Greifvorrichtung in der Vorderansicht,
Figur 2 einen Hubwagen mti einer Greifvorrichtung in der Seitenansicht von rechts,
Figur 3 eine Greifvorrichtung,
Figur 4 eine Einzelheit entlang dem Schnitt B-B,
Figur 5 eine Einzelheit entlang der Schnittlinie A-A in der Figur 3,
Figur 6 eine Einzelheit entlang der Schnittlinie C-C in der Figur 3,

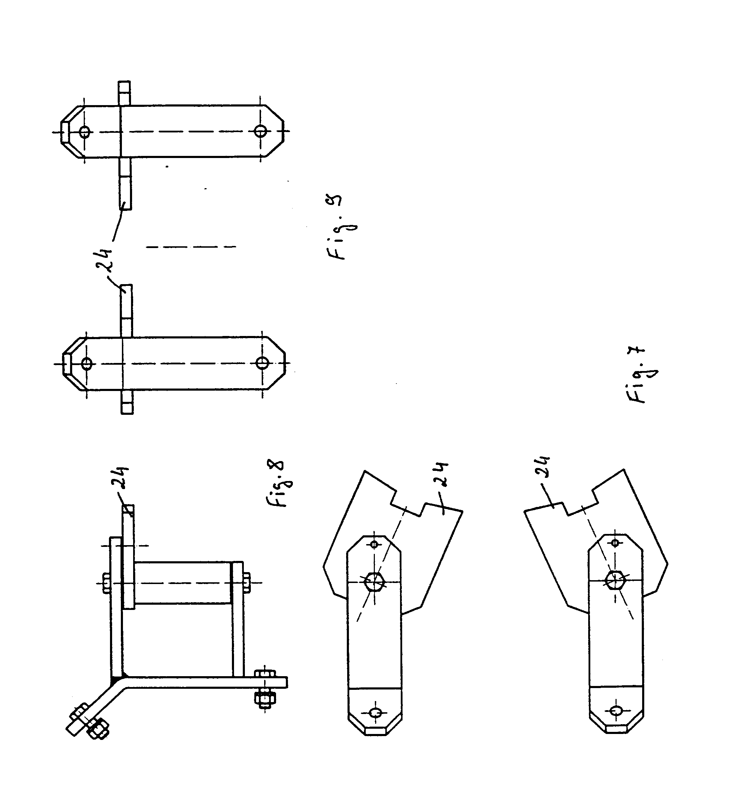

Figur 7 zeigt zwei Abstützungen,
Figur 8 zeigt die Abstützungen in der Vorderansicht,

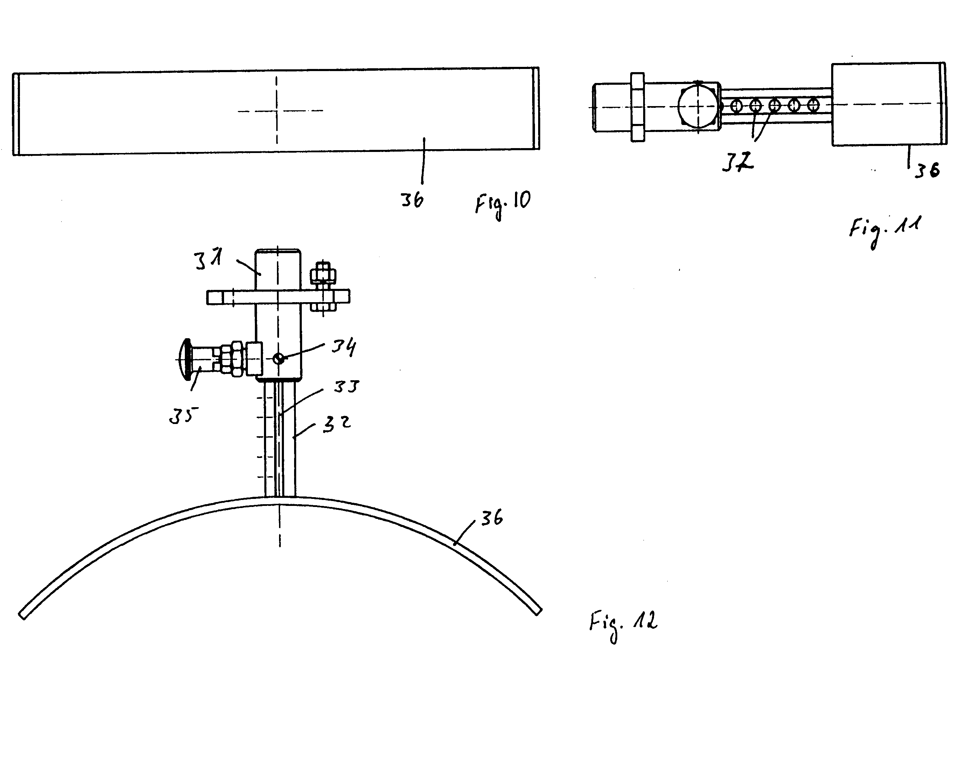

Figur 9 zeigt die Abstützung in der Seitenansicht von links,
Figur 10 einen Anschlag in der Vorderansicht,
Figur 11 einen Anschlag mit Halterung in der Seitenansicht von links,
Figur 12 einen Anschlag in der Draufsicht,
Figur 13 eine zweite Ausführungsform einer Greifvorrichtung im geöffneten Zustand,
Figur 14 die Greifvorrichtung nach Figur 13 im geschlossenen Zustand,
Figur 15 den Bewegungsablauf beim Greifen eines Fasses,
Figur 16 die Greifvorrichtung nach Figur 13 in der Seitenansicht von rechts,
Figur 17 die Greifvorrichtung in der Draufsicht.

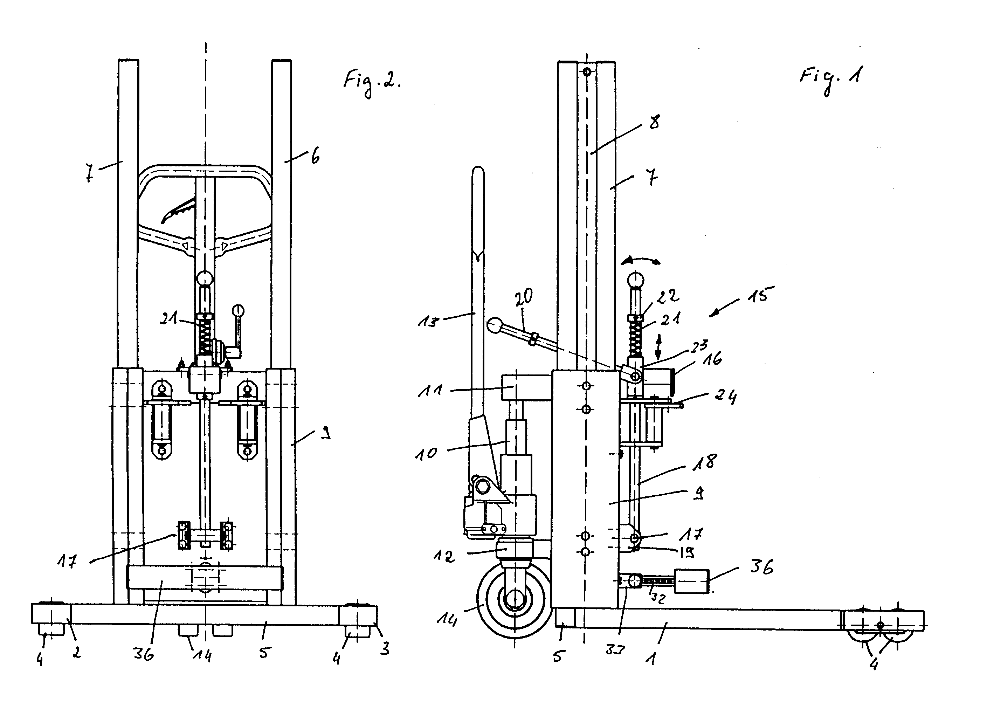

In der Figur 1 ist ein Hubwagen in der Vorderansicht dargestellt.

Der Hubwagen umfaßt ein Fahrgestell 1, welches i.w. U-förmig ausgebildet ist. An den beiden Schenkeln 2,3 des Fahrgestells 1 sind Rollen 4 ausgebildet.

Auf dem quer zu den beiden Schenkeln 2,3 und diese verbindend ist ein Träger 5 vorgesehen, auf dem i.w. senkrecht zum Fahrgestell 2 Führungssäulen 6,7 angeordnet sind.

Die Führungssäulen weisen jeweils eine Führung 8 auf. Auf den Führungssäulen 6,7 ist ein höhenverstellbarer Schlitten 9 angeordnet, der nicht dargestellte Räder oder Rollen aufweist, die in den Führungen 8 laufen.

Der Schlitten 9 ist über einen Träger 11 mit einer Zylinder-Kolbeneinheit 10 verbunden.

Das Fahrgestell ist über ein Verbindungselement 12 mit einer Lenk- und Zugstange 13 verbunden. Das Rad 14 ist in radialer Richtung betrachtet verschwenkbar.

An dem Schlitten 9 ist eine Greifvorrrichtung 15 angeordnet.

Die Greifvorrichtung 15 umfaßt einen Greifer 16 und Abstützungen 24.

Der Greifer 16 ist verschieblich an einer um eine Achse 17 verschwenkbaren Führungsstange 18 angeordnet.

Die Führgungsstange 18 ist am Schlitten 9 mittels Laschen 19 befestigt.

Die Schwenkachse 17 der Führungsstange 18 liegt unterhalb des Greifers 16.

Der Greifer 16 ist mittels eines Betätigungshebels 20 in der Längserstreckung der Führungsstange 18 verschiebbar. Über den Betätigungshebel 20 kann auf vorteilhafte Weise die Führungsstange 18 verschwenkt werden.

Die Verschiebung des Greifers 16 auf der Führungsstange 18 erfolgt gegen eine Federkraft einer Feder 21, welche oberhalb des Greifers 16 angeordnet ist. Die Feder 21 wird bei einer Aufwärtsbewegung des Greifers 16 gegen eine Begrenzung 22 zur Anlage gebracht.

Der Greifer 16 ist an einer die Führungsstange 18 umgebenden Buchse 23 angeordnet. Der Betätigungshebel 20 ist gelenkig mit der Buchse 23 verbunden.

Unterhalb des Greifers 16 sind zwei in einer Ebene liegenden und in der Ebene verschwenkbarern Abstützungen 24 vorgesehen.

Die Abstützungen 24 sind über Halterungen 24a auf dem Schlitten 9 angeordnet.

Wie aus den Figuren 2, 3 und 5 ersichtlich ist, ist zur Arretierung des Betätigungshebels 20 eine Arretiereinheit 25 vorgesehen. Die Arretiereinheit 25 weist einen Hebel 26 auf, der mit einer Gewindestange 27 verbunden ist, die mit einem Ende an einer Buchse 28 befestigt ist, durch welche sich der Betätigungshebel 20 hindurch erstreckt. Durch Betätigen des Hebels 26 wird durch die Buchse 28 der Hebel 20 arretiert.

Zur Begrenzung der Bewegung des Betätigungshebels 20 ist ein Anschlag 29 vorgesehen. Die Bewegung der Buchse 23 angeordnet ist, begrenzt-

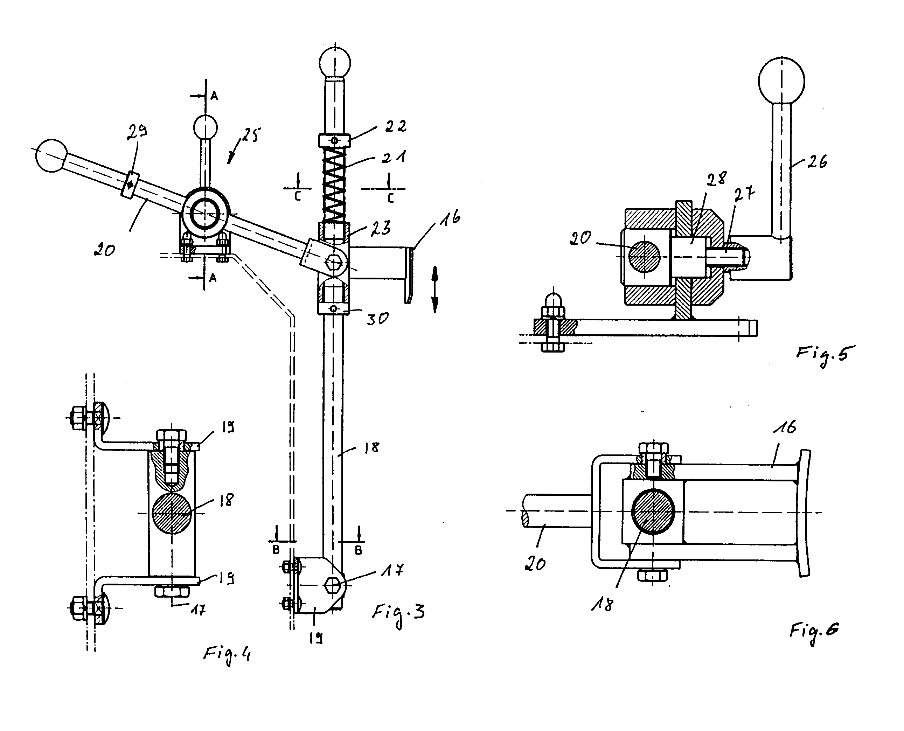

Die Arretiereinheit 25 ist am Schlitten befestigt. Der Korpus des Schlittens 9 ist in der Figur 3 gestrichelt dargestellt.

Unterhalb des Greifers 16 sind Abstützungen 24 angeordnet. Diese sind mit Abstand zueinander am Schlitten 9 positioniert. Die Abstützungen 24 sind symmetrisch bzgl. des Greifers 16 aneordnet.

Mit 36 ist ein bogenförmiger Anschlag bezeichnet. Der Abstand des Anschlags 36 zum Schlitten 9 ist veränderbar. Hierzu ist am Schlitten 9 ein zylinderförmiger Körper 31 angeordnet, in welchem koaxial ein Träger 32 geführt ist. Der Träger 32 weist eine Führungsnut 33 auf, in welcher ein Stift 34 eingreift. Desweiteren ist ein an dem Körper 31 und diesen durchdringend ein hin- und herverschiebbarer Bolzen mit einem Kopf 35 vorgesehen, welcher in Bohrungen 37 des Trägers 32 eingreift.

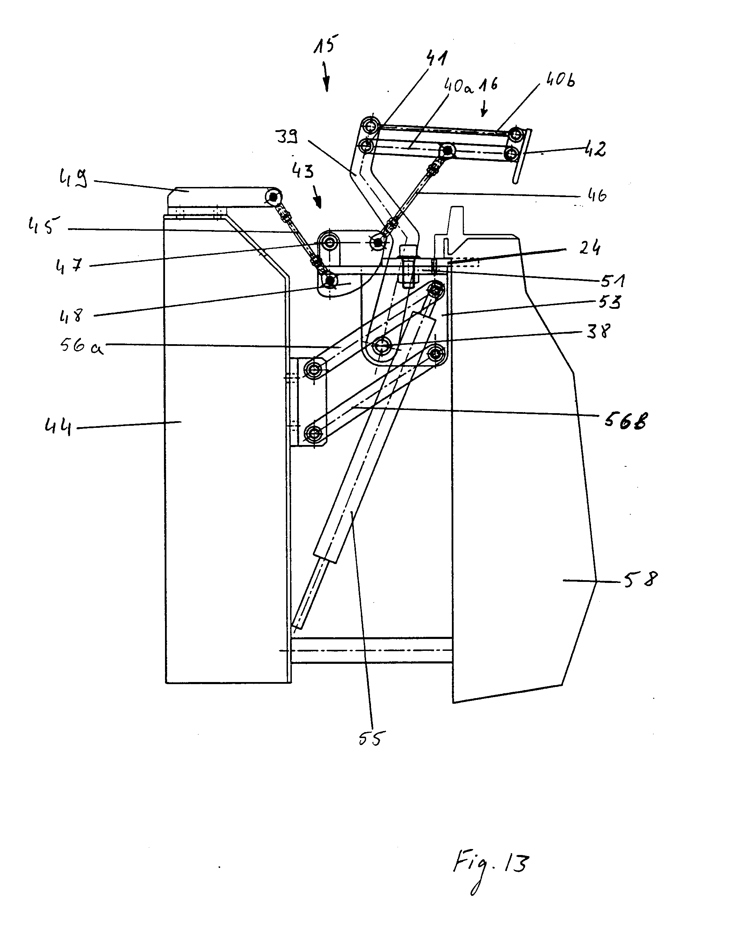

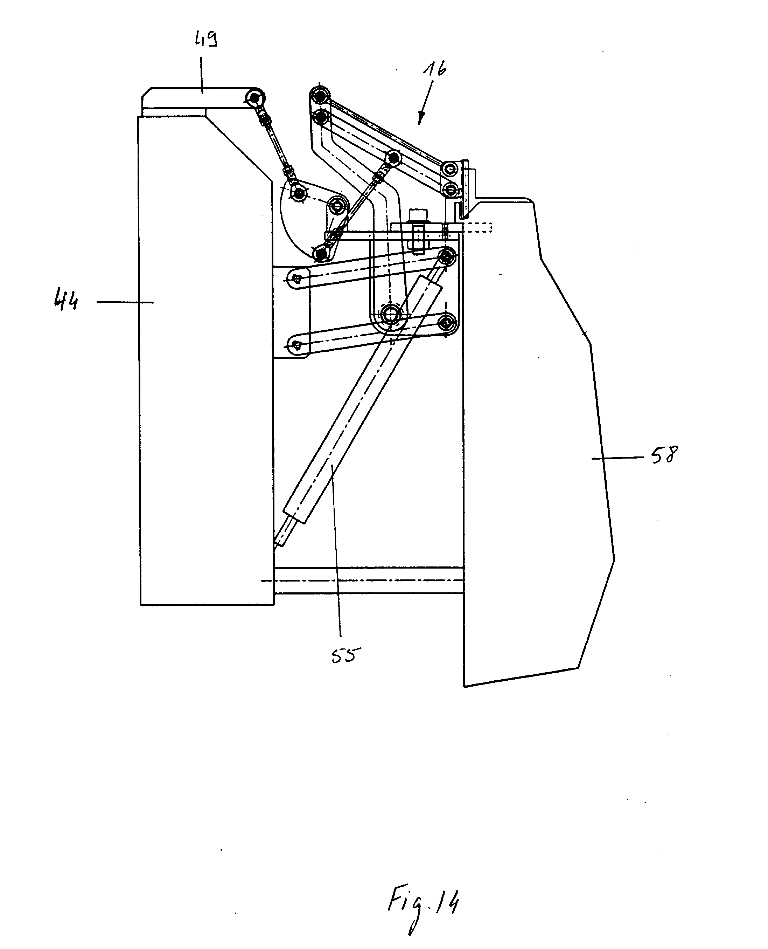

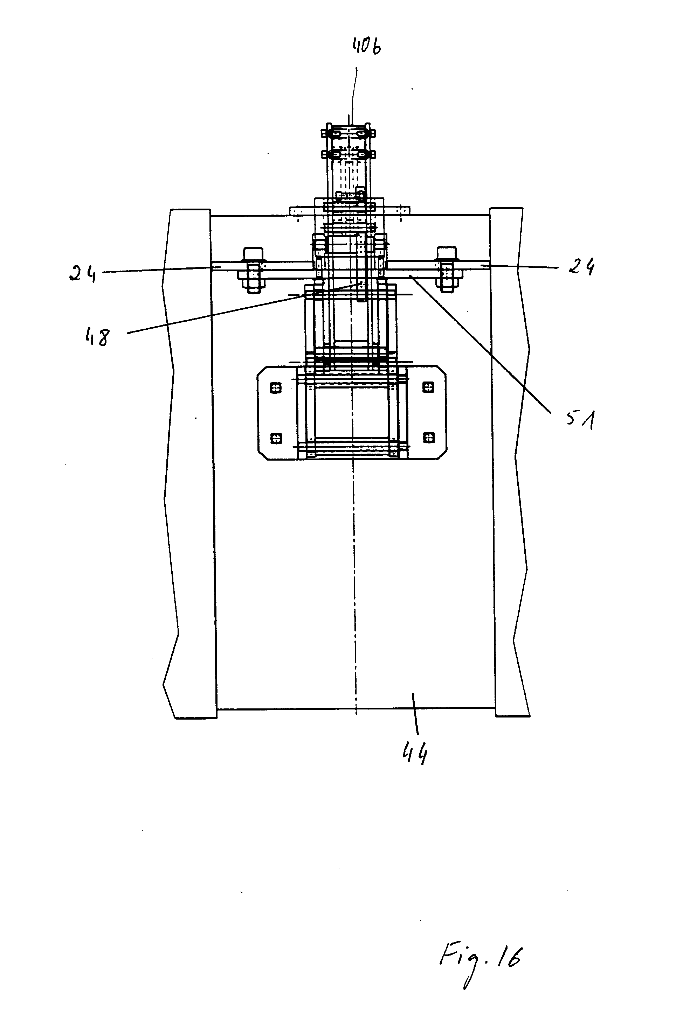

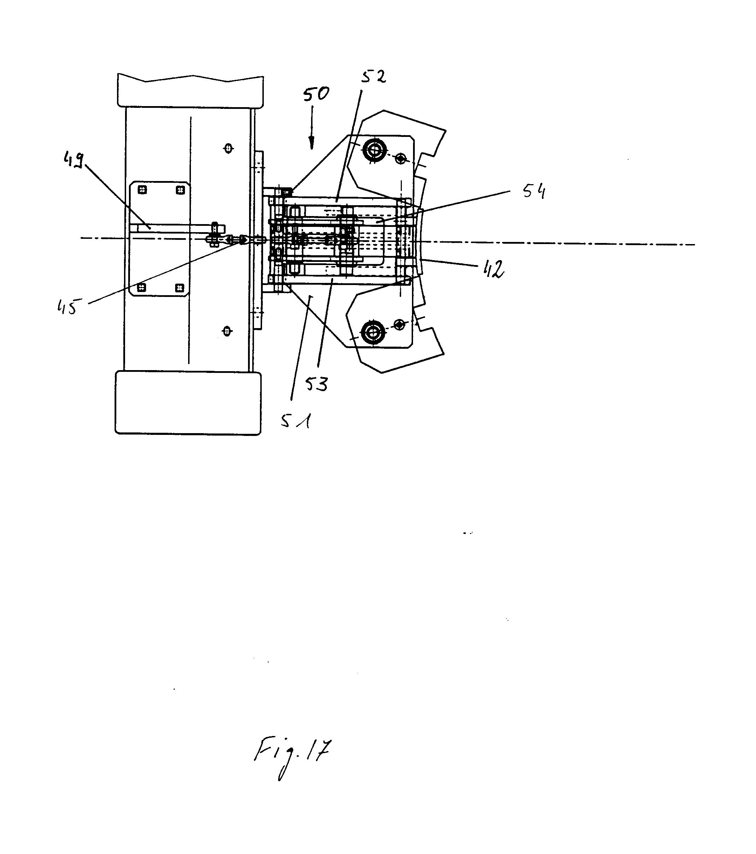

In den Figuren 13 bis 17 ist eine zweite Ausführungsform einer Greifvorrichtung dargestellt.

Die Greifvorrichtung 15 umfaßt einen Greifer 16 und Abspitzungen 24.

Der Greifer 16 umfaßt einen ersten um eine Achse 38 verschwenkbaren Arm 39 und einen zweiten, am ersten Arm 39, verschwenkbar angeordneten Arm 40 auf. Der zweite Arm 40 ist um eine Achse 41 verschwenkbar. Der Greifer 16 weist zwei Paare von parallel zu- und übereinander angeordneten Armen 40a, 40b. Die beiden Armpaare 40a, 40b sind an ihrem vorderen Ende über eine Greifnase 42 verbunden. Die Arme 40a, 40b sind mit verschwenkbar an der Greifnase 40 gelagert.

Der zweite Arm 40a ist über eine Umsetzeinrichtung 43 mit dem Schlitten 44 verbunden. Die Umsetzeinrichtung 43 umfaßt ein erstes und ein zweites Verbindungselement 45;46 sowie ein um eine Achse 47 verschwenkbares Koppelglied 48. Das erste Verbindungselement 45 ist einesends über eine Halterung 49 mit dem Schlitten 44 und andernends mit dem Koppelglied 48 verbunden. Das zweite Verbindungselement 46 ist einesends mit dem Koppelglied 48 und andernends mit dem ersten Arm 40a verbunden. Bei dem Koppelglied 48 handelt es sich um eine Scheibe.

Die Greifvorrichtung 15 ist auf einem Träger 50 angeordnet. Der träger 50 weist eine Platte 51 und zwei parallel zueinander und i.w. senkrecht zur Platte 51 sich nach unten erstreckenden Befestigungsplatten 52 und 53 auf. In der Platte 51 it eine Durchgangsöffnung 54 ausgebildet, durch welche sich der erste Arm 39 und das Koppelglied 48 erstreckt.

Der Träger 50 ist über eine Zylinder-Kolbeneinheit 55 mit dem Schlitten 44 verbunden. Der Träger 50 ist ferner über Verbindungsstangen 56 mit dem Schlitten 44 verbunden. In der dargestellten Ausführungsform sind zwei Paare von parallel-und übereinander angeordneten Verbindungsstangen 56a, 56 vorgesehen.

Auf der Platte 51 des Trägers 50 sind zwei Abstützungen 24 angeordnet, die verschwenkbar gelagert sind.

Bei dem Schlitten 9 bzw. 44 mußt es sich nicht zwingend um einen Schlitten eines Hubwagens handeln. Es können auch Schlitten sein, die an anderen Flurförderfahrzeugen angeordnet sind.

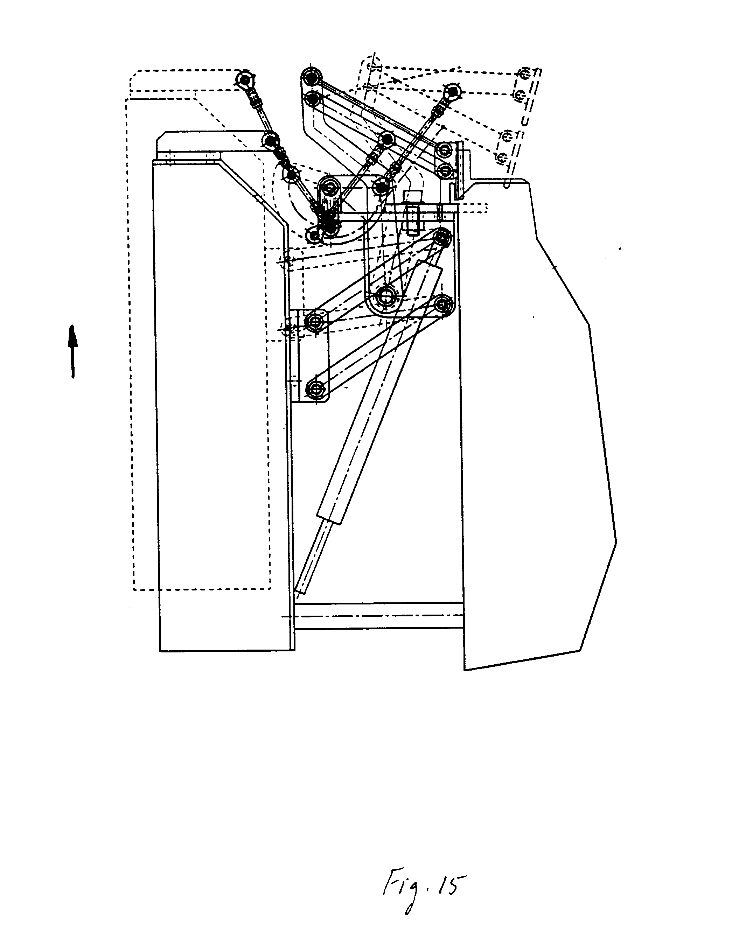

Aus der Figur 15 ist der Bewegungsablauf der Greifvorrichtung dargestellt.

Die Greifvorrichtung wird zunächst so positioniert, daß die Abstützungen 24 unterhalb einer Wulst 57 eines Fasses 58 zur Anlage kommt. Der Greifer 16 ist geöffnet. Wird nun der Schlitten 44 vertikal nach oben geschoben, so wird das Koppelglied 48 über das erste Verbindungselement 45 um die Achse 47 in die gestrichelt dargestellte Position verschoben. Entsprechend dem Verschwenken des Koppelgliedes 48 wird der Greifer mit seiner Greifnase 42 umgriffen. Die Greifnase 42 kommt dann zur Anlage an den Rand 59 des Fasses 58, wodurch das Faß 58 gegriffen wird.

## Patentansprüche

1. Greifvorrichtung, insbesondere für Hubwagen mit einen höhenverstellbaren Schlitten zum Transport von Fässern, dadurch gekennzeichnet, daß der Greifer (16) verschieblich an einer um eine Achse (17) verschwenkbaren Führungsstange (18) angeordnet ist und der Greifer (16) zum Faßtransport arretierbar ist.

2. Greifvorrichtung nach Anspruch 1, dadurch gekennzeichnet, daß die Führungsstange (18) am Schlitten (9) angeordnet ist.

3. Greifvorrichtung nach Anspruch 1 oder 2, dadurch gekennzeichnet,, daß die Schwenkachse (17) unterhalb des Greifers (16) liegt.

4. Greifvorrichtung nach einem der Ansprüche 1 bis 3, dadurch gekennzeichnet, daß der Greifer (16) gegen eine Federkraft nach oben verschieblich ist.

5. Greifvorrichtung nach einem der Ansprüche 1 bis 4, dadurch gekennzeichnet, daß der Greifer (16) mittels eines Betätigungshebels (20) verschiebbar ist.

6. Greifvorrichtung nach Anspruch 5, dadurch gekennzeichnet, daß der Betätigungshebel (20) mit dem Greifer (16) gelenkig verbunden ist.

7. Greifvorrichtung nach einem der Ansprüche 5 oder 6, dadurch gekennzeichnet, daß der Betätigungshebel (20) arretierbar ist.

8. Greifvorrichtung nach einem der Ansprüche 1 bis 7, dadurch gekennzeichnet, daß der Greifer (16) an einer die Führungsstange (18) umgebenden Buchse (23) angeordnet ist, daß die Buchse (23) gelenkig mit dem Betätigungshebel (20) verbunden ist, und daß oberhalb der Buchse (23) eine Druckfeder (21) vorgesehen ist, welche gegen eine Begrenzung zur Anlage kommt.

9. Greifvorrichtung, insbesondere für Hubwagen mit einem höhenverstellbaren Schlitten zum Transport von Fässern, dadurch gekennzeichnet, daß der Greifer (16) einen ersten um eine Achse (38) verschwenkbaren Arm (39) und einen zweiten am ersten Arm (39) angeordneten, verschwenkbaren Arm (40) aufweist, und
daS der zweite Arm (40) über eine Umsetzeinrichtung (43) mit dem Schlitten (44) verbunden ist.

10. Greifvorrichtung nach Anspruch 9, dadurch gekennzeichnet, daß der Greifer (16) zwei parallel zu- und übereinander angeordneten ersten Arme (40a,40b) aufweist, und daS die beiden Arme (40a, 40b) an ihren vorderen Enden durch eine Greifnase (42) miteinander verbunden sind.

11. Greifvorrichtung nach Anspruch 9 oder 10, dadurch gekennzeichnet, daß die Umsetzeinrichtung (43) ein erstes und ein zweites Verbindungselement (45;46) sowie ein um eine Achse (47) verschwenkbares Koppelglied (48) umfaßt,
daß das erste Verbindungselement (45) eines Ends mit dem Schlitten (44) und anderen Ends mit dem Koppelglied (48) verbunden ist, daß das zweite Verbindungselement (46) eines Ends mit dem Koppelglied (48) und andern Ends mit dem ersten Arm (40a) verbunden ist, und daß die beiden Enden der Verbindungselemente (45;46) auf einem gedachten Kreisbogen am Koppelglied (48) angeordnet sind.

12. Greifvorrichtung nach Anspruch 11, dadurch gekennzeichnet, daß die Verbindungselemente(45;46) längenveränderlich sind.

13. Greifvorrichtung nach Anspruch 1, dadurch gekennzeichnet, daß das Kopplungsglied (48) eine Scheibe ist.

14. Greifvorrichtung nach Anspruch 11, dadurch gekennzeichnet, daß die Vorrichtung (16) auf einem Träger (50) angeordnet ist.

15. Greifvorrichtung nach Anspruch 1, dadurch gekennzeichnet, daß der Träger ( 50 ) höhenverstellbar ist.

16. Greifvorrichtung nach Anspruch 15, dadurch gekennzeichnet, daß der Träger (50) über eine Zylinder-Kolbeneinheit ( 55) mit dem Schlitten ( 44 ) verbunden ist.

17. Greifvorrichtung nach Anspruch 15 oder 16, dadurch gekennzeichnet, daß der Träger ( 50 ) über wenigstens eine Verbindungsstange ( 56 ) mit dem Schlitten ( 44) verbunden ist.

18. Greifvorrichtung nach Anspruch 17, dadurch gekennzeichnet, daß wenigstens ein Paar von parallel zu- und übereinander angeordneten Verbindungsstangen (56a,b) vorgesehen ist.

19. Greifvorrichtung nach einem oder mehreren vorstehenden Ansprüchen 1 bis 18, dadurch gekennzeichnet, daS die Abstützung (24) verschwenkbar ist.

20. Greifvorrichtung nach Anspruch 19, dadurch gekennzeichnet, daß zwei im Abstand zueinander in einer Ebene liegenden Abstützungen (24) vorgesehen sind.

21. Greifvorrichtung nach einem oder mehreren vorstehend genannten Ansprüchen, dadurch gekennzeichnet, daß der Abstand des Anschlags (36) zum Schlitten (9) veränder-22. Greifvorrichtung nach Anspruch 21, dadurch gekennzeichnet, daß der Anschlag (36) bogenförmig ausgebildet ist.
